# EUROPÄISCHE PATENTSCHRIFT

(11) **EP 0 486 932 B1**
(45) Veröffentlichungstag und Bekanntmachung des Hinweises auf die Patenterteilung: **03.05.1995**
(21) Anmeldenummer: 91119320.9
(22) Anmeldetag: 13.11.1991
(51) Int. Cl.: C05F 3/00, C05F 7/00, C05D 3/02

(54) **Biologischer Bodenhilfsstoff für landwirtschaftliche Zwecke sowie Verfahren zu seiner Herstellung**
Biological soil improvement material for agricultural purposes and method of producing same
Agent biologique d'amélioration du sol et procédé pour sa fabrication

(30) Priorität: 22.11.1990 DE 4037113
(43) Veröffentlichungstag der Anmeldung: 27.05.1992
(73) Patentinhaber: Albeck, Sabine, D-74357 Bönnigheim (DE); Rusch, Eva, D-79252 Stegen (DE); Rusch, Thomas, D-79252 Stegen (DE); Scholl, Hedwig, D-76327 Pfinztal (DE)
(72) Erfinder: Albeck, Sabine, D-74357 Bönnigheim (DE); Rusch, Eva, D-79252 Stegen (DE); Rusch, Thomas, D-79252 Stegen (DE); Scholl, Hedwig, D-76327 Pfinztal (DE)
(74) Vertreter: Becker, Maria, Dipl.-Phys.

(56) Entgegenhaltungen:
- DE-A- 3 826 873
- DE-C- 3 833 178
- US-A- 3 826 638
- WORLD PATENTS INDEX LATEST Week 8938, Derwent Publications Ltd., London, GB; AN 89-276183 & NL-A-8800314

## Beschreibung

Die Erfindung betrifft einen biologischen Bodenhilfsstoff für landwirtschaftliche Zwecke, enthaltend Kot, Mist, Gülle oder Klärschlamm sowie Verfahren zur Herstellung des Bodenhilfsstoffes.

Die Verwertung tierischer Exkremente schafft, insbesondere in Anbetracht der heute üblichen Massentierhaltung, grosse Probleme. Es ist üblich, diese in den Entstehungsbetrieben zu verwerten und sie ohne Behandlung dem Boden zuzuführen, was mit unangenehmen Geruchsbelästigungen verbunden ist und bekanntlich zu Überdüngungen führt. Eine direkte Verbringung in Nachbarbetriebe oder in solche ohne Tierhaltung ist aus seuchenhygienischen Gründen verboten.

Der Trockensubstanzgehalt und die Zusammensetzung der tierischen Abgänge ist bei den einzelnen Tierarten recht unterschiedlich und hängt im wesentlichen von der Art der Fütterung ab. Die Tockensubstanz beträgt bei Schweinegülle im Mittel 7 % und bei Geflügel 14 %, während die Werte bei Rindergülle dazwischen liegen. Bei Klärschlamm beträgt der Trockensubstanzgehalt nach oxidativer oder reduktiver "Vergärung" 5 - 10 %, nach dem Abpressen ca. 25 - 35 %. Bei Koten und Misten kann er bis 75 % ansteigen.

Die Gehalte an Pflanzennährstoffen bei den einzelnen Güllearten sind, bezogen auf die Trockenmasse, recht unterschiedlich. Sie hängen sowohl von der Tierart, der Art der Fütterung, der Jahreszeit, bei Klärschlamm von örtlichen Besonderheiten, wie der Art der Konditionierung und der verwendeten Schlammpresse ab.

Aus ökonomischen Gründen ist die Ausbringung der tierischen und menschlichen Abgänge der skizzierten Art auf fernab vom Entstehungsort liegende Böden ungeeignet, da bis zu 93 % Wasser transportiert werden müssen. Der Einsatz von Spezialfahrzeugen wäre, auch wegen der unerträglichen Geruchsbeeinflussung, unerlässlich.

Aus der DE-OS 26 10 648 ist ein Düngemittel bekannt, das aus einer Mischung von Tierkot, Gesteinsmehl und Kieserit besteht. Um eine gute Abbindung zu erreichen, wird dieser Mischung silikatreiches Vulkangesteinsmehl zugemischt. Dieses Verfahren ist jedoch aufwendig, da die Mischungskomponenten aus gesetzlichen Gründen gut aufeinander abzustimmen sind und die Beschaffung des geeigneten Gesteinsmehls aufwendig ist.

Aus dem World Patents Index Latest, Week 8938, Derwent Publications Ltd., London, GB, AN 89-276183 & NL-A-8 800 314 (H. Loggers), 1.September 1989, ist ein Dünger bekannt, bei dem tierischen Abgängen Säuren, insbesondere H₂SO₄, HNO₃ und/oder H₃PO₄, zusammen mit Kalk, Ammoniak und/oder Kalium enthaltenden Substanzen zugesetzt werden. Ausserdem kann Gips beigemischt werden.

Der Erfindung liegt die Aufgabe zugrunde, tierische und menschliche Abgänge bei gleichzeitiger Erhaltung des darin enthaltenen Gehalts an Pflanzennährstoffen mittels umweltfreundlicher Verfahren zu verwerten, den darin enthaltenen Gehalt an Pflanzennährstoffen zu erhalten und gleichzeitig ein Produkt zu schaffen, das als biologischer Bodenaufbaustoff einen hervorragenden Düngewert besitzt. Dabei wird besonderer Wert auf Umweltverträglichkeit und Wirtschaftlichkeit des Verfahrens gelegt.

Das erfindungsgemässe Verfahren ist gekennzeichnet durch folgende Verfahrensschritte:
- die zu verarbeitenden Produkte (Kot, Mist, Gülle, Klärschlamm) werden mit einem Gemisch aus Polyuronsäuren und Säuren behandelt und die entstehende Abluft gereinigt;
- nach dem Zusetzen von Gips wird das Produkt zu einer homogenen Masse gemischt;
- nach dem Vermischen wird das Produkt einer Primärerhitzung bei einer Temperatur von mindestens 135° C zur Seuchenhygienisierung unterzogen und anschliessend
- bei Temperaturen über 100° C getrocknet.

Verarbeitet werden Kot, Mist und Gülle der einzelnen Tierarten. Aus pflanzenphysiologischen und verarbeitungstechnischen Gründen ist eine Mischung dieser Substanzen besonders zu empfehlen. Klärschlamm wird getrennt verarbeitet.

Die Verwendung von Gips hat mehrere Vorteile. Zum einen fällt Gips in Öl- und Kohlekraftwerken als Abfall an. Von dem in die Kraftwerke eingespeisten, gemahlenen Kalk wird das in den Feuerungsabgasen entstandene SO₂/SO₃ letztlich zu Calciumsulfat (= Gips) gebunden. Es ist ferner Neutralisationsprodukt bei der Herstellung von Zitronensäure. Die Verwertung von Gips für den Bodenhilfsstoff nach der Erfindung dient somit auch der Entsorgung der Gipshalden.

Es ist auch zu bedenken, dass Gips ein natürliches, mineralisches Düngemittel darstellt, das zur Calcium- und Schwefelversorgung der Pflanzen wertvoll ist.

Zum anderen hat die Verwendung von Gips als Zuschlagstoff für das Produkt nach der Erfindung besondere Vorteile, da es bei der Zumischung zu Kot, Gülle oder Klärschlamm noch über ein erhebliches Wasserbindevermögen verfügt. Durch die Beimischung von Gips zu den mit Säuren behandelten Produkten werden entstandene bzw. bereits vorhandene Ammoniumverbindungen nicht zersetzt, sondern bleiben düngewirksam erhalten.

Als vorteilhaft hat sich erwiesen, dem Produkt biologische, quellfähige Substanzen nämlich organische Kolloide in Form von Polyuronsäuren beizumischen. Das Mischungsverhältnis kann bis zu 3 Gew.% betragen. Polyuronsäuren begünstigen die Granulier- bzw. Pelletierfähigkeit der Produkte. Diese ist unerlässlich, um eine staubfreie, auch maschinelle Ausbringung der Fertigprodukte zu ermöglichen. Ausserdem werden durch Polyuronsäuren die in den Verarbeitungsprodukten enthaltenen oder entstehenden, die Umwelt stark beeinträchtigenden organischen Geruchsstoffe absorbiert.

Es kann ferner günstig sein, dem homogenisierten Produkt Holzasche zuzusetzen. Während nämlich Stickstoff und Phosphor meist reichlich vorhanden sind, fehlt vielfach Kalium. Eine Optimierung des Kaliumgehaltes ist durch Holzasche möglich, wie sie zur Zeit in vielen Zellulosefabriken anfällt. Die erzeugten Produkte werden dadurch zu pflanzengerechten Mehrnährstoffdüngern.
- Die Behandlung erfolgt vorzugsweise in geschlossenen Behältern, wobei die bei der Säurebehandlung und beim Erhitzungsvorgang entstehende Abluft über biologische Filter, die Filtermaterial in Form von Hackhäcksel, Baumrinde, Langfasertorf, Heidekraut, Kokos u.dgl. enthalten, gereinigt wird. Die Aufarbeitung erfolgt somit praktisch geruchsfrei.
- Überschusswasser wird einer entsprechenden Behandlung zugeführt. Es kann in biologischen Filtern verdunstet werden. Auch ist die vorflutgerechte Beseitigung von unerwünschten Inhaltsstoffen durch die Tätigkeit von Mikroorganismen, nach einer Passage durch eine in einem Becken befindliche Kompostschicht, aus biologischen und ökologischen Gründen mit Schilf (phragmites communis) bepflanzt, möglich. Bei Klärschlamm ist die Rückführung in ein Klärwerk durchführbar.
- Der nach dem Verfahren hergestellte biologische Bodenaufbaustoff ist gekennzeichnet durch einen Feststoffgehalt an Kot bzw. Klärschlamm von mindestens 60 Gew.% sowie bis zu 35 % Gips.
- Der Anteil der quellfähigen Kolloide in Form von Polyuronsäuren beträgt bis zu 3 Gew.%. Der pH-Wert des erhaltenen Produkts liegt im Neutralbereich.
- Der Gehalt an N, P, K und Mg ist pflanzengerecht optimiert; der Gehalt an Ca und SO₄ ist dem Auswaschungsverlust angepasst. Die organische Masse ist als Nährhumus von den im Boden lebenden Mikroorganismen zur Produktion von Humus voll nutzbar.

Der Ablauf des Verfahrens gestaltet sich wie folgt:
In einem Behälter werden die angelieferten Produkte mit Polyuronsäuren mittels verdünnter Schwefel-, Salpeter- oder Essigsäure in den schwach sauren Bereich eingestellt. Dabei werden austretende Ammoniakemissionen als geruchloses Ammoniumsulfat und -nitrat bzw. -acetat und organische Geruchsstoffe an die Polyuronsäuren gebunden. Die anorganischen Entstehungsprodukte sind identisch mit dem technisch hergestellten und als Düngemittel verwendeten schwefelsauren bzw. salpetersauren Ammoniak- Sie sind in jedem Falle pflanzenverträglich. Die Abluft wird einem Biofilter zugeführt.

Das Produkt wird, falls erforderlich, gemahlen und mit Gips versetzt, und danach zu einer homogenen Masse gemischt.

In einem Trocknungsofen wird die Masse bei mindestens 135° C Anfangstemperatur auf etwa 110° C erhitzt;hierbei erfolgt die Seuchenhygienisierung. Die dabei entstehende Abluft wird wiederum über ein Biofilter geführt. Anfallende Brüden werden bei höherer Temperatur im Biofilter verdampft oder in einem Schilfbecken mit Kompostfilter gereinigt oder in ein Klärwerk zurückgeführt. Die nach der Trocknung anfallenden Granuli enthalten maximal 15 % Restfeuchte. Der Bodenhilfsstoff ist streufähig.

Untersuchungen haben gezeigt, dass das so geschaffene Produkt im gesamten Bereich der Landwirtschaft mit Vorteil einsetzbar ist, da es sich um ein natürliches Düngemittel mit einem ausgewogenen Gehalt an Pflanzennährstoffen handelt. Die zugemischte Gipsmenge ergänzt den niederschlagsbedingten Calcium- und Sulfataustrag, der in allen Böden erfolgt und mit mindestens 600 kg CaO und 350 kg SO₄ Hektar und Jahr zu veranschlagen ist.

Mittels des beschriebenen Verfahrens ist auch eine Entsorgung von Zellstoff-Einmalartikeln in Form von Windeln mit Vorteil möglich. Die in diesen Produkten enthaltenen, meist aus Polymeren bestehenden Substanzen wie Hydrogele quellen bei Zutritt von Flüssigkeit, speichern diese und binden geruchsintensive Stoffe. Derartige Quellsubstanzen fördern die Trocknung des Produkts, so dass bei Verwendung dieser Hygieneprodukte die Beimischung der Polyuronsäuren verringert oder auf diese verzichtet werden kann. Die Verwendung von wasserabweisendem Papier anstelle von Kunststoffolien seitens der Hersteller der Windeln wäre für die Entsorgung noch vorteilhafter.

Ein weiterer Vorteil wird darin gesehen, dass eine Vielzahl von Rückständen aus einer weiten Palette von Produktionsbetrieben entsorgt werden kann, indem sie als Zusatzstoffe dem Bodenhilfsstoff zugegeben werden. Beispielsweise können Rückstände bzw. Reststoffe aus Kraftwerksanlagen, nämlich Aschen, Stäube und Sedimente zugesetzt werden. Bei der Aufbereitung von Wässern, z.B. aus der Kühl-, Brauch- oder Trinkwasseraufbereitung können die anfallenden Kalke zugemischt werden. Denkbar ist auch die Beimischung von Rückständen aus der Zucker- oder Zitronensäurefabrikation oder der Pharmaindustrie, wie z.B. Mycelien aus der Produktion von Antibiotika. Das bei der Rauchgasentschwefelung anfallende Ammonsulfat kann ebenfalls zugegeben werden. Abfälle der Lederherstellung können, wenn sie chromfrei sind, ebenso beigemischt werden, wie Feststoffe aus der Gülleseparierung oder Federn aus Geflügelschlachtungen oder entfettete Konfiskaterückstände. Diese Aufzählung soll nicht abschliessend gelten, wird aber als bevorzugt angesehen.

## Patentansprüche

1. Verfahren zur Herstellung eines organischen, streufähigen Bodenhilfsstoffs für landwirtschaftliche Zwecke durch Verwertung von tierischen und menschlichen Abgängen unter Zusatz von Säuren und Gips,
**gekennzeichnet durch**
folgende Verfahrensschritte:
- die zu verarbeitenden Produkte (Kot, Mist, Gülle, Klärschlamm) werden mit einem Gemisch aus Polyuronsäuren und Säuren behandelt und die entstehende Abluft gereinigt;
- nach dem Zusetzen von Gips wird das Produkt zu einer homogenen Masse gemischt;
- nach dem Vermischen wird das Produkt einer Primärerhitzung bei einer Temperatur von mindestens 135° C zur Seuchenhygienisierung unterzogen und anschliessend
- bei Temperaturen über 100° C getrocknet.

2. Verfahren nach Anspruch 1, dadurch gekennzeichnet, dass die Polyuronsäuren in einem Mischungsverhältnis bis zu 3 Gew.% zugesetzt werden.

3. Verfahren nach Anspruch 1 oder 2, dadurch gekennzeichnet, dass dem Produkt Holzasche zugesetzt wird.

4. Verfahren nach einem der vorhergehenden Ansprüche, dadurch gekennzeichnet, dass die bei der Säurebehandlung und/oder Hygienisierung entstandene Abluft über Biofilter von geruchsbelästigenden Reststoffen gereinigt wird.

5. Verfahren nach einem der vorhergehenden Ansprüche, dadurch gekennzeichnet, dass die bei der Trocknung anfallenden Brüdenwässer über Biofilter verdampft oder über Schilfbecken von geruchsintensiven Stoffen gereinigt oder einem Klärwerk zugeleitet werden.

6. Bodenhilfsstoff nach dem Verfahren gemäss einem der vorhergehenden Ansprüche, gekennzeichnet durch eine Mischung, die folgende Mischungsanteile umfasst:
- Kot und/oder Mist und/oder Gülle,
- Gips oder Klärschlamm und Gips,
- Polyuronsäuren,
wobei der Bodenhilfsstoff eine getrocknete, beispielsweise granulare Form aufweist.

7. Bodenhilfsstoff nach Anspruch 6, dadurch gekennzeichnet, dass der Feststoffgehalt an Tierkot oder Klärschlamm jeweils mindestens 60 % und der Gehalt an Gips bis zu 35 % beträgt und dass die Mischung quellfähige Polyuronsäuren bis zu 3 Gew.% enthält und/oder der Bodenhilfsstoff Holzasche enthält.

8. Bodenhilfsstoff nach einem der Ansprüche 6 und 7 dadurch gekennzeichnet, dass sich der pH-Wert des Fertigproduktes im Neutralbereich befindet.

9. Bodenhilfsstoff nach einem der Ansprüche 6 bis 8, dadurch gekennzeichnet, dass Zellstoffaserprodukte, wie Zellstoff- bzw. Papierwindeln, insbesondere mit Hydrogelen, und/oder Reststoffe aus Kraftwerksanlagen, wie Asche, Stäube, Sedimente u.dgl. zugesetzt sind.

10. Bodenhilfsstoff nach einem der Ansprüche 6 bis 9, dadurch gekennzeichnet, dass Rückstände aus der Aufbereitung von Wässern, wie Kalke aus Kühl, Brauch- und Trinkwasseraufbereitung; der Zuckerfabrikation; der Zitronensäurefabrikation; der Pharmaindustrie, wie Mycelien aus der Produktion von Antibiotika; der Rauchgasentschwefelung, wie Ammonsulfat; der Lederherstellung; der Gülleseparierung; Federn aus Geflügelschlachtereien; und/oder entfettete Konfiskaterückstände zugesetzt sind.

11. Verwendung des Verfahrens nach einem der Ansprüche 1 bis 5 zur Entsorgung von Zellstoff- bzw. Papierwindeln durch Hinzufügen von Windein zu den zu verarbeitenden Produkten.

## Claims

1. Method for producing an organic dispersible soil improvement material for agricultural purposes by the utilization of animal and human excretions, with the addition of acids and gypsum,
characterized by
the following procedural steps:
- treating the products to be processed (faeces, droppings, dung-water, sludge) with a mixture of polyuronic acids and acids, and cleaning the resulting exhaust air;
- adding gypsum and mixing the product to attain a homogeneous mass;
- subjecting the product, after the mixing step, to a primary heating step at a temperature of at least 135°C, for epidemic sanitization, and finally
- drying the product at temperatures above 100°C.

2. Method according to claim 1, characterized in that the polyuronic acids are added at a ratio of mixture of up to 3% by weight.

3. Method according to claim 1 or 2, characterized in that wood ashes are added to the product.

4. Method according to any of the preceding claims, characterized in that the exhaust air resulting from the acid treatment and/or sanitization process is cleaned via biofilters from residual matter that causes unpleasant smells.

5. Method according to any of the preceding claims, characterized in that the vapor waters forming during the heating step are vaporized via biofilters and cleaned from intensively smelling substances in reed basins, or delivered to a sewage treatment plant.

6. Soil improvement material obtained by the method according to any of the preceding claims, characterized by a mixture comprising the following mixture components:
- faeces and/or droppings and/or dung-water;
- gypsum or sludge and gypsum;
- polyuronic acids;
the soil improvement material having a dried, for example granular form.

7. Soil improvement material according to claim 6, characterized in that the solid matter content consisting of animal droppings or sludge is in each case at least 60 %, the content of gypsum up to 35%, and that the mixture contains swelling polyuronic acids at a rate of up to 3% by weight, and/or that the soil improvement material contains wood ashes.

8. Soil improvement material according to any of claims 6 and 7, characterized in that the pH value of the finished product is in the neutral range.

9. Soil improvement material according to any of claims 6 to 8, characterized in that wood pulp fibre products, such as cellulose and/or paper diapers, especially such containing hydrogels, and/or residual substances from power stations, such as ashes, dusts, sediments, or the like, are added.

10. Soil improvement material according to any of claims 6 to 9, characterized in that residual materials from the treatment of water, such as limes from the treatment of cooling, industrial and drinking water; from the production of sugar; from the production of citric acid; from the pharmaceutical industry, such as mycelia from the production of antibiotics; from the flue gas desulphurization process, such as ammonium sulphate; from the production of leather; from the separation of dung-water; feathers from poultry processing; and/or degreased confiscator residues, are added.

11. Use of a soil improvement material according to any of claims 1 to 5 for the disposal of cellulose and/or paper diapers, by the addition of diapers to the products to be processed.

## Revendications

1. Procédé pour la fabrication d'un agent organique distribuable d'amélioration du sol pour des besoins ruraux par récupération de déchets animaux et humains sous addition d'acides et de gypse,
**caractérisé par**
les procédés opérationnels suivants:
- les produits à transformer (excréments, fumier, purin, boue de curage) sont traités avec un mélange d'acides polyuroniques et acides et l'air d'évacuation se produisant est épuré;
- après avoir ajouté du gypse, le produit est mélangé pour former une masse homogène;
- après le mélange le produit est soumis à une caléfaction primaire à une température d'au moins 135° C pour une hygiénisation contre épidémies et ensuite
- séché à des températures dépassant 100° C.

2. Procédé selon la revendication 1, caractérisé en ce que les acides polyuroniques sont ajoutés dans un rapport de mélange jusqu'à 3 % en poids.

3. Procédé selon la revendication 1 ou 2, caractérisé en ce que de la cendre de bois est ajoutée au produit.

4. Procédé selon l'une des revendications précédentes, caractérisé en ce que l'air d'évacuation résultant du traitement avec les acides et/ou de l'hygiénisation est épuré des substances résiduelles incommodant l'odorat à travers des filtres biologiques.

5. Procédé selon l'une des revendications précédentes, caractérisé en ce que les eaux chaudes se produisant lors du séchage sont évaporées à travers des filtres biologiques ou épurées des substances à odeur intensive à travers des bassins de jonc ou bien conduites dans une usine de décantation.

6. Agent d'amélioration du sol selon le procédé conforme à une des revendications précédentes, caractérisé par un mélange avec les ingrédients suivants:
- excréments et/ou fumier et/ou purin,
- gypse ou boue de curage et gypse,
- acides polyuroniques,
l'agent d'amélioration du sol présentant une forme sèche, par exemple granulée.

7. Agent d'amélioration du sol selon la revendication 6, caractérisé en ce que la teneur en matière solide provenant d'excréments animaux ou de boue de curage s'élève à au moins 60 % et la teneur en gypse à jusqu'à 35 % et que le mélange contient jusqu'à 3 % en poids des acides polyuroniques et/ou que l'agent d'amélioration du sol contient de la cendre de bois.

8. Agent d'amélioration du sol selon l'une des revendications 6 et 7, caractérisé en ce que la valeur pH du produit fini se situe dans la zone neutre.

9. Agent d'amélioration du sol selon l'une des revendications 6 à 8, caractérisé en ce que les produits en fibres de verre, tels que langes en cellulose ou en papier, sont additionnés d'hydrogels et/ou de substances résiduelles provenant de centrales de force motrice, telles que cendre, poussières, sédiments et similaires.

10. Agent d'amélioration du sol selon l'une des revendications 6 à 9, caractérisé en ce que les résidus de l'épuration des eaux, tels que chaux provenant de l'épuration d'eau de refroidissement, d'eau industrielle et d'eau potable; de la fabrication de sucre; de la fabrication d'acide citrique; de l'industrie pharmaceutique, tel que le mycélium provenant de la production d'antibiotiques; de la désulfuration de gaz de fumée, tel que sulfate d'ammoniaque; de la fabrication de cuir; de la séparation de purin; de plumes provenant d'abattoirs de volailles; et/ou des résidus de confiscats dégraissés, sont additionnés.

11. Utilisation du procédé selon l'une des revendications 1 à 5 pour l'épurement de langes en cellulose ou en papier par addition de langes aux produits à traiter.
